# EUROPEAN PATENT SPECIFICATION

(11) **EP 3 966 654 B1**
(45) Date of publication and mention of the grant of the patent: **31.07.2024**
(21) Application number: 19940156.3
(22) Date of filing: 31.07.2019
(51) Int. Cl.: G05D 1/00

(54) **POSITIONING AUTONOMOUS VEHICLES**
POSITIONIERUNG VON AUTONOMEN FAHRZEUGEN
POSITIONNEMENT DE VÉHICULES AUTONOMES

(43) Date of publication of application: 16.03.2022
(73) Proprietor: Hewlett-Packard Development Company, L.P., Spring, TX 77389 (US)
(72) Inventor: NAVAS SANCHEZ, Borja, 08174 Sant Cugat del Valles (ES); VIEDMA PONCE, Ramon, 08174 San Cugat del Valles (ES); HASSIDOV PLESER, Aviv, 08174 San Cugat del Valles (ES)
(74) Representative: Plasseraud IP
(86) International application number: PCT/US2019/044388
(87) International publication number: WO 2021/021163

(56) References cited:
- CN-A- 103 075 963
- KR-B1- 100 825 919
- US-A1- 2015 081 156
- US-A1- 2015 081 156
- US-A1- 2017 297 568
- US-B2- 8 050 863
- US-B2- 9 916 703

## Description

### BACKGROUND

Sensors may be used to determine the position of autonomous vehicles relative to their environment, for example to monitor how far along a route the vehicle is or whether the vehicle is maintaining an intended path.

Some background information can be found in KR100825919B1 and CN103075963A. KR100825919B1 relates to a distance measuring sensor to detect a very short distance between a light source and a target surface by detecting position changes of the emitted beam on the target surface, and a robot equipped with the distance measuring sensor. CN103075963A relates to an indoor locating system with first and second laser rangefinders.

### SUMMARY

The scope of the invention is defined by the appended claims.

### BRIEF DESCRIPTION OF THE DRAWINGS

Non-limiting examples will now be described with reference to the accompanying drawings, in which:
Figure 1 shows a schematic flow chart of an example method;
Figures 2A and 2B show schematic representations of example apparatuses comprising an autonomous vehicle;
Figure 3 shows a schematic representation of an example apparatus comprising an autonomous vehicle and first and second alignment targets;
Figure 4 shows a schematic representation of an example alignment target of the apparatus of Figure 3;
Figure 5 shows a schematic representation of another example alignment target of the apparatus of Figure 3 in use;
Figure 6 shows a schematic representation of an example machine readable medium and processor.

### DETAILED DESCRIPTION

Autonomous vehicles may be used, for example, as surface marking robots for drawing or printing lines on a surface by depositing print agent while moving along the surface. Such autonomous vehicles may be used in building and industrial applications, where high precision positioning, e.g. of lines produced by a surface marking robot, may be useful. Furthermore, autonomous vehicles such as, for example, a surface marking robot or a surface scanning robot, may be used in an indoor environment, or another environment where there may be a lack of reference objects which the autonomous vehicles can use to determine their position.

Global positioning systems, such as a set of Ultra Wide Band (UWB) or ultrasound beacons, may be used to monitor the global position of an autonomous vehicle as it moves around an environment. These beacons can send and receive signals to each other so that the relative locations of the beacons can be determined. The beacons can also send and receive signals to and from the autonomous vehicle in order to determine the location of the autonomous vehicle relative to the beacons. However, the autonomous vehicle may also need to be aligned with the environment itself, for example for construction applications, or other applications where the autonomous vehicle needs to be accurately positioned or orientated in particular locations in the environment, or needs to interact with the environment (e.g. marking a particular point on the floor). Therefore a calibration or set up may be performed to position or orientate the autonomous vehicle at a particular predetermined point in the environment while measuring the vehicle's location using the beacons, to effectively align the coordinate system of the beacons and the vehicle with the environment.

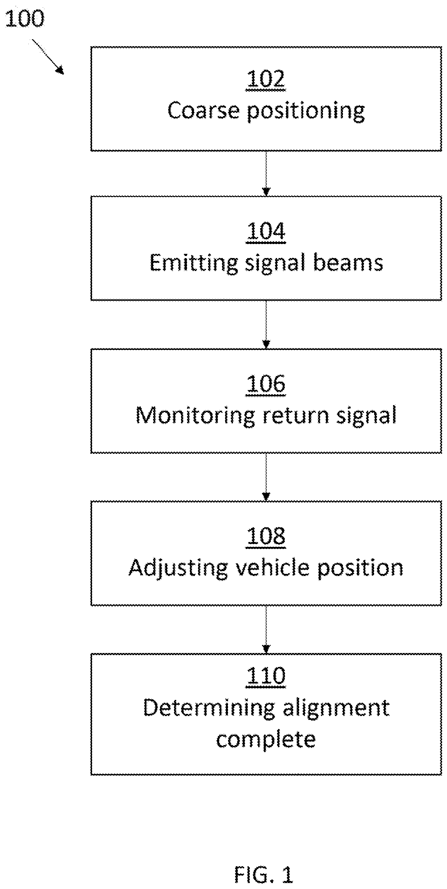

Figure 1 shows a method 100, which may be a method for aligning an autonomous vehicle. Block 102 of the method comprises coarsely positioning a first signal beam emitter located on the vehicle in line with a first alignment target and coarsely positioning a second signal beam emitter located on the vehicle in line with a second alignment target, wherein the first and second alignment targets are each aligned with a predefined grid.

in some examples, the coarse positioning may be performed automatically by the vehicle, for example using cameras on the vehicle. In other examples, the coarse positioning may comprise a user placing the vehicle on a spot which is approximately aligned with the first and second alignment targets. In some environments, such as construction environments, there may already be a predefined grid set up or marked on the floor, in which case the calibration may be to line the autonomous vehicle up with this grid. in other examples the predefined grid may be defined in another way, e.g. by a coordinate system used in a CAD file or image file that defines a route the vehicle is to take within the environment. The first and second alignment targets may be positioned e.g. on walls or on the floor of the environment. The first and second signal beam emitters may be located on the vehicle so that the first and second signal beams are emitted in different directions, which may be perpendicular to each other, positioning the emitters to emit signal beams in perpendicular directions may enable the beams to be more easily lined up with a predefined grid. In some examples the first signal beam is emitted in a heading direction (or direction of forward motion) of the vehicle. E.g. the first signal beam may be referenced to a wheel axis of the vehicle such that the beam is emitted perpendicular to this axis. The second signal beam may be emitted in a direction perpendicular to the first signal beam e.g. parallel to the wheel axis. in some examples, where the vehicle is a surface marking robot, the second signal beam may be emitted in a direction in line with, and referenced to, a nozzle head axis of the surface marking robot, which may help to improve the positional accuracy of lines printed by the nozzles. The first and second alignment targets may be positioned in the environment such that the first signal beam can be aligned with the first alignment target and the second signal beam can simultaneously be aligned with the second alignment target. The first and second alignment targets may each be located on a reference gridline of the predefined grid, such that the vehicle can be placed at an intersection of these gridlines at block 102. The first alignment target may comprise a reflective surface to return a signal beam emitted from the first signal beam emitter to the vehicle. The second alignment target may comprise a similar reflective surface or may comprise a mark or line in the environment (e.g. on the floor) to which the second signal beam can be manually aligned. In this example the second signal beam emitter may be a visible wavelength laser to enable a user of the vehicle to visually check whether the second signal beam is aligned with a particular mark in the environment

Block 104 of method 100 comprises emitting a first signal beam from the first signal beam emitter towards the first alignment target and emitting a second signal beam from the second signal beam emitter towards the second alignment target. The signal beam emitters may be lasers, which may be part of a laser rangefinder system or photoelectric sensor.

Block 106 comprises monitoring a first return signal beam from the first alignment target and block 108 comprises adjusting at least one of a position and an orientation of the vehicle based at least in part on the first return signal beam. if the vehicle is aligned, the signal beam will be reflected back towards the vehicle. A first sensor on the vehicle may be used to monitor the first return signal beam. The first sensors may be part of a laser rangefinder system or photoelectric sensor. In some examples, block 106 further comprises monitoring a second return signal from the second alignment target and block 108 further comprises adjusting at least one of a position and an orientation of the vehicle based on both the first and second return signals. In some examples, the method may comprise automatically adjusting the position and/or orientation of the vehicle and in some examples the method may comprise manually adjusting the position and/or orientation of the vehicle.

In some cases, if the vehicle is not yet correctly aligned, the signal beam will not be reflected back towards the vehicle (e.g. it may be absorbed by a part of the alignment target or other material in the environment). In that case the return signal beam may have a low or zero intensity at the vehicle.

The first and/or second alignment targets are such that if the vehicle is not yet correctly aligned, the signal beam will be reflected back to the vehicle but with a different path length or intensity, as explained in more detail below. The return signal therefore provides information on whether the vehicle is moving closer towards or further away from alignment. In some examples, the method may comprise monitoring the first and/or second return signal beam while adjusting the position and/or orientation of the vehicle to determine whether the signal beam is moving towards or away from an alignment area on the alignment target; and automatically adjusting the position and/or orientation of the vehicle to move the signal beam towards the alignment area. Automatic adjustment based on feedback from the sensor may make the alignment set up quicker.

One or both of the alignment targets comprises an angled reflective surface to reflect the first signal beam back to the vehicle, such that a first beam path length depends on a location of incidence of the first signal beam on the angled reflective surface. In some examples, one or both of the alignment targets may comprise a reflective alignment area to reflect the first signal beam back to the vehicle if the vehicle is aligned with the first alignment target, and an absorptive area to absorb the first signal beam if the vehicle is not aligned with the first alignment target.

Block 110 comprises determining that alignment is complete based on the first and second return signal beams. For example, a return signal of a particular intensity or path length as detected by a sensor on the vehicle may indicate that the alignment is complete. in some examples, the method 100 comprises continuing to adjust an orientation and/or a position of the vehicle until the vehicle is aligned. In some examples the method 100 may comprise continuing to adjust the orientation/position of the vehicle for a predetermined amount of time and then displaying an indication that alignment has failed and/or that a user should perform the coarse positioning again, or returning to an automatic coarse positioning procedure. In some examples, if a user attempts to proceed with using the vehicle within the environment before a successful alignment has been determined, the vehicle may display a warning, or may store, or send to a user a notification recording that alignment was not successfully performed, for future reference.

The method of Figure 1 enables an accurate alignment of the vehicle within a particular environment, enabling the vehicle to accurately move to particular points in the environment, for example to provide accurate surface marking on a floor in an indoor construction environment, e.g. for layout processes. In some examples, a heading accuracy of the autonomous vehicle of ±0.0023° for a 50m path length (a lateral deviation of 2mm) may be achieved. The method may therefore enable improved positioning accuracy while reducing the need to use complex equipment such as total stations. Furthermore, the method may enable an autonomous vehicle to be accurately positioned in an environment while using a global positioning system that comprises a set of beacons, or other system that tracks relative position. In some examples, where layout processes are to take place over multiple floors, UWB beacons could be left in place e.g. on a ground floor, and the vehicle could be moved to an upper floor, and then signals from the beacons below could still be used to position the vehicle without requiring realignment. This could simplify and speed up such processes.

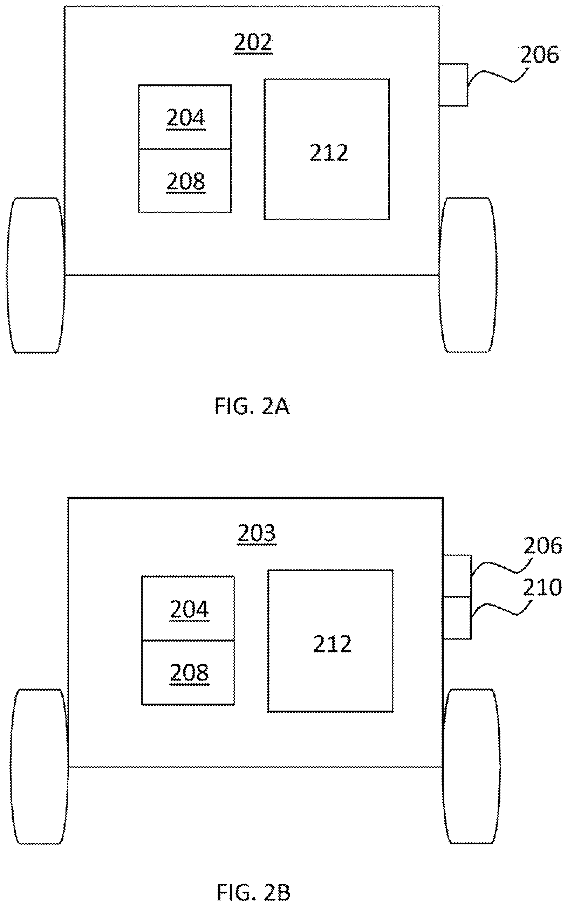

Figure 2A shows a schematic representation of an autonomous vehicle 202, which may be to carry out the method of Figure 1. The autonomous vehicle 202 comprises a first laser 204 and a second laser 206. The first laser 204 may be mounted on the autonomous vehicle 202 to emit light in a direction parallel to a movement (or heading) direction of the autonomous vehicle 202. Mounting the first laser in line with a heading direction may help to improve the accuracy of a heading orientation of the vehicle. in some examples, the second laser 206 may be mounted on the autonomous vehicle 202 to emit light in a direction perpendicular to the heading direction. In some examples, the autonomous vehicle 202 may be a surface marking robot which comprises a nozzle or a set of nozzles and the second laser 206 may be mounted on the autonomous vehicle 202 in a direction in line with the nozzle head axis. In some examples, the autonomous vehicle may comprise a third laser mounted on an opposite side of the vehicle from the second laser, in line with the second laser to emit light in a direction opposite to the second laser. This may help improve the accuracy of manual alignment of the second laser with a second alignment target.

The autonomous vehicle 202 also includes a first sensor 208 to receive light from the first laser 204 after reflection back towards the autonomous vehicle 202 from a first alignment target. In some examples, the first laser 204 and the first sensor 208 may be housed together in a rangefinder laser/photoelectric sensor system. The autonomous vehicle 202 may also include a second sensor 210 to receive light from the second laser 206 after reflection back towards the autonomous vehicle 202 from a second alignment target. In some examples, the second laser 206 and the second sensor 210 may be housed together in a rangefinder laser/photoelectric sensor system.

The autonomous vehicle 202 also includes processing circuitry 212 to receive sensor data from the first sensor 208 and determine that the autonomous vehicle is aligned with the first alignment target based on the sensor data, and in response, to output a signal indicating that the autonomous vehicle is aligned. In the example shown in Figure 2 the processing circuitry 212 is located on board the autonomous vehicle 202, but in some examples, the processing circuitry may be located off the vehicle, but in communication with the sensors of the autonomous vehicle e.g. via a Bluetooth, Wi-Fi or other wireless connection. In some examples, outputting a signal indicating that the autonomous vehicle 202 is aligned may comprise, for example, turning on or changing an indicator light (e.g. an LED on the vehicle), displaying a message or other indicator on a display located on the autonomous vehicle 202, or sending a signal to a display via a wireless signal from the vehicle 202.

Figure 28 shows a schematic representation of an autonomous vehicle 203, which is similar to the autonomous vehicle 202 of Figure 2A, but additionally includes a second sensor 210 to receive light from the second laser 206 after reflection back towards the autonomous vehicle 202 from a second alignment target In some examples, the second laser 206 and the second sensor 210 may be housed together in a rangefinder laser/photoelectric sensor system. in some examples, the processing circuitry 212 is to additionally receive sensor data from the second sensor and to determine that the autonomous vehicle is aligned with both the first and second alignment targets based on the first and second sensor data.

In some examples the processing circuitry 212 is to determine, based on sensor data received from the first and second sensors 208, 210, that the autonomous vehicle 202 is not aligned with both the first and second alignment targets, and in response, to control a motion control system of the autonomous vehicle 202 to adjust at least one of a position and an orientation of the vehicle 202. For example, the position and/or orientation of the vehicle 202 may be continuously adjusted while the first and second lasers 204, 206 continue to emit light and the sensors 208, 210 continue to monitor for a particular return signal. In some examples, the position and/or orientation may by adjusted randomly or following a predetermined scanning path. In some examples the processing circuitry is to determine, based on the sensor data, which direction to move the autonomous vehicle. When a return signal indicating alignment is received by the sensors 208, 210 (e.g. light of a particular intensity or path length or a combination of these factors), the processing circuitry 212 may determine that the autonomous vehicle is aligned, and in response, the processing circuitry 212 may then stop adjustment of the position and/or orientation of the vehicle. in some examples the processing circuitry 212 may also cause an indicator to be displayed, indicating that the autonomous vehicle 202 is aligned. Aligning the vehicle in this way may provide greater accuracy than a manual alignment.

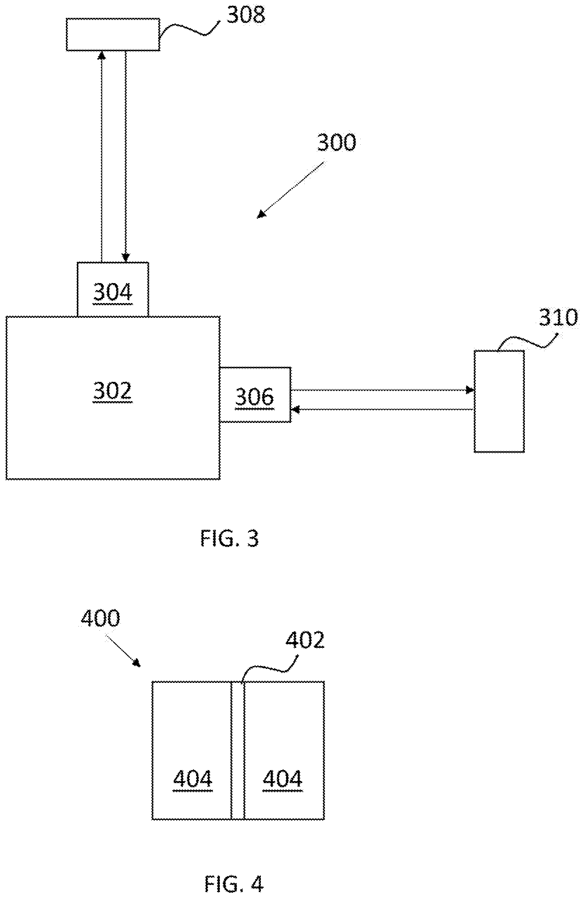

Figure 3 shows an example of an apparatus 300 comprising an autonomous vehicle 302, which may be similar to the autonomous vehicle 202 described above in relation to Figure 2. The autonomous vehicle 302 comprises a first rangefinder laser system 304 (including a laser and a sensor) and a second rangefinder laser system 306, The apparatus 300 also comprises a first alignment target 308 and a second alignment target 310. The first alignment target 308 and second alignment target 310 are positioned such that the first rangefinder laser system 304 can be aligned with the first alignment target 308 and the second rangefinder laser system 306 can simultaneously be aligned with the second alignment target 310.

Figure 4 shows an example of an alignment target 400 that may form the first and/or second alignment target 308, 310 in the apparatus of Figure 3. The alignment target 400 comprises a reflective portion 402 to reflect light emitted by a laser that is correctly aligned with the target 400, which is bordered on either side by an absorptive area 404 to absorb light emitted by a laser which is not correctly aligned with the target 400. For example, the reflective area 402 may be formed from a mirrored surface and the absorptive area may be formed from a black matt surface, in some examples the reflective area may be surrounded on all sides by the absorptive area. In some examples the reflective area may be bordered by the absorptive area on two sides, for example where an autonomous vehicle is to control a laser to move in a certain plane, the absorptive areas may be positioned to absorb light emitted over a certain distance either side of the reflective area, in that plane. An alignment target as shown in Figure 4 may improve the accuracy with which the signal beam can be aligned with the target.

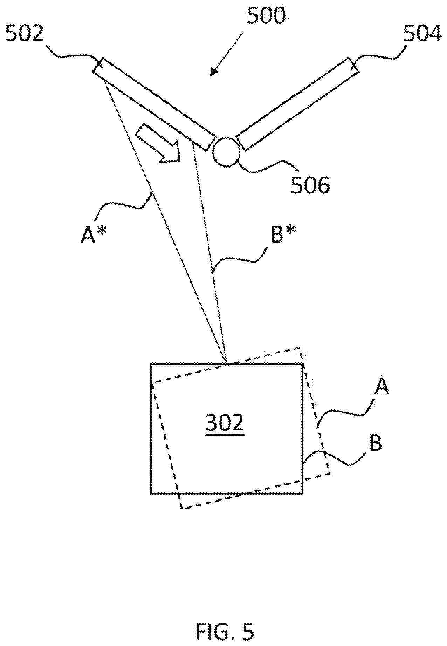

Figure 5 shows another example of an alignment target 500 that may be used as the first and/or second alignment target 308, 310, in use, along with the autonomous vehicle 302. The alignment target 500 comprises a first reflective surface 502 and a second reflective surface 504,, positioned on either side of a central reflective area 506, to form a 'V' shape. The central reflective area 506 is positioned such that when a laser beam is incident on the central reflective area, the laser beam (and also therefore the autonomous vehicle) is aligned with the alignment target 500. The first and second reflective surfaces 502 and 504 are formed from a diffusely reflective material such as matt white paint. The first reflective surface 502 and the second reflective surface 504 are angled to reflect light emitted by a laser on the vehicle 302 back to the vehicle 302 such that a beam path length of light emitted by the laser depends on a location of incidence of the light on the angled reflective surface. In the example shown in Figure 5, the reflective surfaces 502 and 504 are each positioned at angles such that a light beam incident on the reflective surface at a point closer to the central reflective area will travel along a shorter path length than a light beam incident on the reflective surface at a point further from the alignment area. in some examples, other arrangements of reflective surfaces, which cause a path length of a light beam to depend on a location of incidence of the light on the reflective surface may be used. For example, a concave or convex shape, or first and second flat reflective surfaces positioned either side of a central reflective area but angled such that a path length of a light beam emitted from a vehicle in front of the target will increase as the light beam moves from one side of the target towards the central reflective area (i.e. an inverted 'V' shape).

As shown in Figure 5, as the vehicle 302 moves from a first position in which it is relatively further from alignment (shown as position A in Figure 5) to a second position in which it is relatively closer to alignment (shown as position 8 in Figure 5), an incidence point of a light beam emitted from a laser located on the vehicle 302 moves closer towards the central reflective area. The path of the light beam from the vehicle when in the first position (shown as A* in Figure 5) is longer than the path of the light beam (shown as B* in Figure 5) from the vehicle when in the second position. Therefore, the vehicle can determine whether it is moving closer or further away from the central reflective area of the alignment target and which direction to move next to bring the vehicle closer into alignment. The alignment target 500 has a symmetrical arrangement, so if the light beam moves past the central area the path length will start to increase again. This information can be used to control the vehicle to change direction, to move it towards alignment

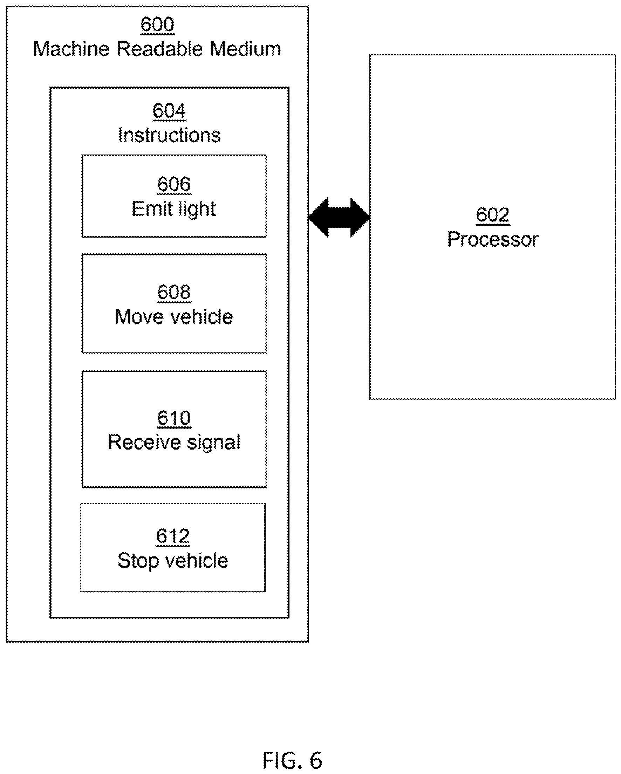

Figure 6 shows a machine-readable medium 600 in combination with a processor 602. in some examples the machine-readable medium is included in an autonomous vehicle as described in relation to Figures 2 or 3 (for example the machine readable medium may be located on the vehicle or in wireless communication with the vehicle). In some examples, the machine-readable medium may be to perform the method of Figure 1.

The machine-readable medium 600 has a set of instructions 604 stored thereon. Block 606 comprises instructions which, when executed by the processor 602 cause the processor 602 to control an autonomous vehicle, including first and second lasers and first and second sensors, wherein the first laser is orientated in a direction perpendicular to the second laser, to emit light from the first and second lasers.

Block 608 comprises instructions to cause the processor to control the autonomous vehicle to move, i.e. to control a motion control system of the autonomous vehicle to adjust a position and/or orientation of the vehicle. Block 610 comprises instructions to receive signals from the first and second sensors, and if the first sensor receives a reflected signal of light emitted by the first laser from a first target and the second sensor receives a reflected signal of light emitted by the second laser from a second target meeting at least one predetermined criterion, the instructions at block 612 are to cause the processor to stop the autonomous vehicle and output a signal indicating that the autonomous vehicle is aligned to the first and second target. For example, the predetermined criterion may be receiving a reflected signal from both targets simultaneously, which may be determined from sensor data indicating path length or intensity of the reflected signal.

In some examples, controlling the autonomous vehicle to move comprises instructing the processor to receive or acquire sensor data representing a reflected signal from the first target and a reflected signal from second target and controlling, by the processor, the autonomous vehicle to move in a particular direction based on the received sensor data.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. it shall be understood that each flow and/or block in the flow charts and/or block diagrams, as well as combinations of the flows and/or diagrams in the flow charts and/or block diagrams can be realized by machine readable instructions.

It shall be understood that some blocks in the flow charts can be realized using machine readable instructions, such as any combination of software, hardware, firmware or the like. Such machine readable instructions may be included on a computer readable storage medium (including but is not limited to disc storage, CD-ROM, optical storage, etc.) having computer readable program codes therein or thereon.

The machine readable instructions may, for example, be executed by a general purpose computer, a special purpose computer, an embedded processor or processors of other programmable data processing devices to realize the functions described in the description and diagrams. In particular, a processor or processing apparatus may execute the machine readable instructions. Thus functional modules of the apparatus and devices may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors,

Such machine readable instructions may also be stored in a computer readable storage that can guide the computer or other programmable data processing devices to operate In a specific mode. Further, some teachings herein may be implemented in the form of a computer software product, the computer software product being stored in a storage medium and comprising a plurality of instructions for making a computer device implement the methods recited in the examples of the present disclosure,

The word "comprising" does not exclude the presence of elements other than those listed In a claim, "a" or "an" does not exclude a plurality, and a single processor or other unit may fulfil the functions of several units recited in the claims.

The features of any dependent claim may be combined with the features of any of the independent claims or other dependent claims.

## Claims

1. A method (100) comprising, for an autonomous vehicle:
coarsely positioning (102) a first signal beam emitter located on the vehicle in line with a first alignment target, wherein the first alignment target is aligned with a predefined grid;
emitting (104) a first signal beam from the first signal beam emitter towards the first alignment target;
monitoring (106) a first return signal beam from the first alignment target while adjusting (108) the position and/or orientation of the vehicle to determine whether the first signal beam is moving towards or away from an alignment area on the first alignment target, **characterized in that** the first alignment target comprises an angled reflective surface to reflect the first signal beam back to the vehicle, such that a first beam path length depends on a location of incidence of the first signal beam on the angled reflective surface;
automatically adjusting the position and/or orientation of the vehicle to move the first signal beam towards the alignment area; and
determining (110) that automatically adjusting the position and/or orientation of the vehicle is complete based at least in part on the first return signal beam.

2. A method according to claim 1 further comprising:
coarsely positioning a second signal beam emitter located on the vehicle in line with a second alignment target, wherein the second alignment target is aligned with a predefined grid;
emitting a second signal beam from the second signal beam emitter towards the second alignment target;
monitoring a second return signal beam from the second alignment target and adjusting at least one of a position and an orientation of the vehicle based on the first and second return signal beams; and
determining that automatically adjusting the position and/or orientation of the vehicle is complete based on the first and second return signal beams.

3. A method according to claim 1 wherein the first alignment target comprises a reflective alignment area to reflect the first signal beam back to the vehicle if the vehicle is aligned with the first alignment target, and an absorptive area to absorb the first signal beam if the vehicle is not aligned with the first alignment target.

4. A method according to claim 1, wherein the first signal beam and the second signal beam are orientated to emit light towards different locations.

5. An apparatus (300) comprising an autonomous vehicle (202) and a first alignment target (500);
the autonomous vehicle (202) comprising:
a first signal beam emitter (204) and a second signal beam emitter (208) remote to the first signal beam emitter, wherein the first signal beam emitter is to emit a first signal beam in a different direction to the second signal beam emitter;
a first sensor (206) to receive a first return signal beam from the first signal beam emitter after reflection back towards the autonomous vehicle from a first alignment target; and
processing circuitry (212) adapted to execute the method according to claim 1; and in response, to output a signal indicating that the autonomous vehicle is aligned with the first alignment target;
**characterized in that** the first alignment target comprises an angled reflective surface to reflect the first signal beam emitted by the first signal beam emitter back to the vehicle, such that a first beam path length depends on a location of incidence of the first signal beam on the angled reflective surface.

6. An apparatus according to claim 5, further comprising:
a second sensor to receive a second return signal beam back from the second signal beam emitter after reflection back towards the autonomous vehicle from a second alignment target, wherein the processing circuitry is adapted to execute the method according to claim 2; and in response, to output a signal indicating that the autonomous vehicle is aligned with the second alignment target.

7. An apparatus according to claim 6 wherein the processing circuitry is to determine, based on sensor data received from the first and second sensors, that the autonomous vehicle is not aligned with both the first and second alignment targets, and in response, to control a motion control system of the autonomous vehicle to adjust at least one of a position and an orientation of the vehicle.

8. An apparatus according to claim 7 wherein the processing circuitry is to determine, based on the sensor data received from the first and second sensors, which direction to move the autonomous vehicle.

9. An apparatus according to claim 5 wherein the first signal beam emitter is mounted on the autonomous vehicle to emit the first signal beam in a direction parallel to a movement direction of the vehicle and the second signal beam emitter is mounted on the autonomous vehicle to emit the second signal beam in a direction perpendicular to the movement direction.

10. An apparatus according to claim 5 further comprising an alignment target comprising a reflective alignment area to reflect the first signal beam emitted by the first signal beam emitter back to the vehicle if the vehicle is aligned with the first alignment target, and an absorptive area to absorb the first signal beam emitted by the first signal beam emitter if the vehicle is not aligned with the first alignment target.

11. An apparatus according to any of the above claims 5 to 10, whereby the first and the second signal beams emitters are laser beam emitters.

12. A tangible machine-readable medium (600) comprising a set of instructions (604) which, when executed by a processor (602) cause the processor to:
control the apparatus of claim 5 to perform the method of claim 1.

## Patentansprüche

1. Verfahren (100), das für ein autonomes Fahrzeug Folgendes umfasst:
grobes Positionieren (102) eines ersten Signalstrahlemitters, der sich an dem Fahrzeug in einer Linie mit einem ersten Ausrichtungsziel befindet, wobei das erste Ausrichtungsziel an einem vordefinierten Raster ausgerichtet ist;
Emittieren (104) eines ersten Signalstrahls von dem ersten Signalstrahlemitter in Richtung des ersten Ausrichtungsziels;
Überwachen (106) eines ersten Rücksignalstrahls von dem ersten Ausrichtungsziel, während die Position und/oder die Orientierung des Fahrzeugs angepasst wird (108), um zu bestimmen, ob sich der erste Signalstrahl auf einen Ausrichtungsbereich in Richtung des ersten Ausrichtungsziels oder von diesem weg bewegt, **dadurch gekennzeichnet, dass** das erste Ausrichtungsziel eine abgewinkelte reflektierende Oberfläche umfasst, um den ersten Signalstrahl zurück zu dem Fahrzeug zu reflektieren, sodass eine erste Strahlpfadlänge von einem Einfallsort des ersten Signalstrahls auf der abgewinkelten reflektierenden Oberfläche abhängt;
automatisches Anpassen der Position und/oder der Orientierung des Fahrzeugs, um den ersten Signalstrahl in Richtung des Ausrichtungsbereichs zu bewegen; und
Bestimmen (110), dass ein automatisches Anpassen der Position und/oder der Orientierung des Fahrzeugs abgeschlossen ist, basierend mindestens teilweise auf dem ersten Rücksignalstrahl.

2. Verfahren nach Anspruch 1, das ferner Folgendes umfasst:
grobes Positionieren eines zweiten Signalstrahlemitters, der sich an dem Fahrzeug in einer Linie mit einem zweiten Ausrichtungsziel befindet, wobei das zweite Ausrichtungsziel an einem vordefinierten Raster ausgerichtet ist;
Emittieren eines zweiten Signalstrahls von dem zweiten Signalstrahlemitter in Richtung des zweiten Ausrichtungsziels;
Überwachen eines zweiten Rücksignalstrahls von dem zweiten Ausrichtungsziel und Anpassen von mindestens einem von einer Position und einer Orientierung des Fahrzeugs auf der Basis des ersten und des zweiten Rücksignalstrahls; und
Bestimmen, dass ein automatisches Anpassen der Position und/oder der Orientierung des Fahrzeugs abgeschlossen ist, auf der Basis des ersten und des zweiten Rücksignalstrahls.

3. Verfahren nach Anspruch 1, wobei das erste Ausrichtungsziel einen reflektierenden Ausrichtungsbereich, um den ersten Signalstrahl zurück zu dem Fahrzeug zu reflektieren, falls das Fahrzeug an dem ersten Ausrichtungsziel ausgerichtet ist, und einen absorbierenden Bereich, um den ersten Signalstrahl zu absorbieren, falls das Fahrzeug nicht an dem ersten Ausrichtungsziel ausgerichtet ist, umfasst.

4. Verfahren nach Anspruch 1, wobei der erste Signalstrahl und der zweite Signalstrahl orientiert sind, um Licht in Richtung unterschiedlicher Orte zu emittieren.

5. Vorrichtung (300), die ein autonomes Fahrzeug (202) und ein erstes Ausrichtungsziel (500) umfasst;
wobei das autonome Fahrzeug (202) Folgendes umfasst:
einen ersten Signalstrahlemitter (204) und einen zweiten Signalstrahlemitter (208), der von dem ersten Signalstrahlemitter entfernt ist, wobei der erste Signalstrahlemitter dazu dient, einen ersten Signalstrahl in eine andere Richtung als der zweite Signalstrahlemitter zu emittieren;
einen ersten Sensor (206), um einen ersten Rücksignalstrahl von dem ersten Signalstrahlemitter nach einer Reflexion zurück in Richtung des autonomen Fahrzeugs von einem ersten Ausrichtungsziel zu empfangen; und
eine Verarbeitungsschaltung (212), die angepasst ist, um das Verfahren nach Anspruch 1 auszuführen; und als Reaktion darauf ein Signal, das anzeigt, dass das autonome Fahrzeug an dem ersten Ausrichtungsziel ausgerichtet ist, auszugeben;
**dadurch gekennzeichnet, dass** das erste Ausrichtungsziel eine abgewinkelte reflektierende Oberfläche umfasst, um den ersten Signalstrahl, der von dem ersten Signalstrahlemitter emittiert wird, zurück zu dem Fahrzeug zu reflektieren, sodass eine erste Strahlpfadlänge von einem Einfallsort des ersten Signalstrahls auf der abgewinkelten reflektierenden Oberfläche abhängt.

6. Vorrichtung nach Anspruch 5, die ferner Folgendes umfasst:
einen zweiten Sensor, um einen zweiten Rücksignalstrahl von dem zweiten Signalstrahlemitter nach einer Reflexion zurück zu dem autonomen Fahrzeug von einem zweiten Ausrichtungsziel zu empfangen, wobei der Verarbeitungsschaltkreis angepasst ist, um das Verfahren nach Anspruch 2 auszuführen; und als Reaktion darauf ein Signal, das anzeigt, dass das autonome Fahrzeug an dem zweiten Ausrichtungsziel ausgerichtet ist, auszugeben.

7. Vorrichtung nach Anspruch 6, wobei der Verarbeitungsschaltkreis dazu dient, auf der Basis von Sensordaten, die von dem ersten und dem zweiten Sensor empfangen werden, zu bestimmen, dass das autonome Fahrzeug nicht an sowohl dem ersten als auch dem zweiten Ausrichtungsziel ausgerichtet ist, und als Reaktion darauf ein Bewegungssteuerungssystem des autonomen Fahrzeugs zu steuern, um mindestens eines von einer Position und/oder einer Orientierung des Fahrzeugs anzupassen.

8. Vorrichtung nach Anspruch 7, wobei der Verarbeitungsschaltkreis dazu dient, auf der Basis der Sensordaten, die von dem ersten und dem zweiten Sensor empfangen werden, zu bestimmen, in welche Richtung das autonome Fahrzeug zu bewegen ist.

9. Vorrichtung nach Anspruch 5, wobei der erste Signalstrahlemitter auf dem autonomen Fahrzeug montiert ist, um den ersten Signalstrahl in eine Richtung parallel zu einer Bewegungsrichtung des Fahrzeugs zu emittieren, und der zweite Signalstrahlemitter auf dem autonomen Fahrzeug montiert ist, um den zweiten Signalstrahl in eine Richtung senkrecht zu der Bewegungsrichtung zu emittieren.

10. Vorrichtung nach Anspruch 5, die ferner ein erstes Ausrichtungsziel, das einen reflektierenden Ausrichtungsbereich umfasst, um den ersten Signalstrahl, der durch den ersten Signalstrahlemitter emittiert wird, zurück zu dem Fahrzeug zu reflektieren, falls das Fahrzeug an dem ersten Ausrichtungsziel ausgerichtet ist, und einen absorbierenden Bereich, um den ersten Signalstrahl zu absorbieren, falls das Fahrzeug nicht auf das erste Ausrichtungsziel ausgerichtet ist, umfasst.

11. Vorrichtung nach einem der obigen Ansprüche 5 bis 10, wobei der erste und der zweite Signalstrahlemitter Laserstrahlemitter sind.

12. Greifbares maschinenlesbares Medium (600), das einen Satz von Anweisungen (604) umfasst, die, wenn sie durch einen Prozessor (602) ausgeführt werden, den Prozessor zu Folgendem veranlassen:
Steuern der Vorrichtung nach Anspruch 5, um das Verfahren nach Anspruch 1 durchzuführen.

## Revendications

1. Procédé (100) comprenant, pour un véhicule autonome :
le positionnement grossier (102) d'un premier émetteur de faisceau de signaux situé sur le véhicule en ligne avec une première cible d'alignement, dans lequel la première cible d'alignement est alignée avec une grille prédéfinie ;
l'émission (104) d'un premier faisceau de signaux à partir du premier émetteur de faisceau de signaux vers la première cible d'alignement ;
le contrôle (106) d'un premier faisceau de signaux de retour à partir de la première cible d'alignement tout en ajustant (108) la position et/ou l'orientation du véhicule afin de déterminer si le premier faisceau de signaux se rapproche ou s'éloigne d'une zone d'alignement sur la première cible d'alignement, **caractérisé en ce que** la première cible d'alignement comprend une surface réfléchissante inclinée pour renvoyer le premier faisceau de signaux vers le véhicule, de sorte qu'une longueur du premier trajet du faisceau dépend d'un lieu d'incidence du premier faisceau de signaux sur la surface réfléchissante inclinée ;
l'ajustement automatique de la position et/ou de l'orientation du véhicule pour déplacer le premier faisceau de signaux vers la zone d'alignement ; et
la détermination (110) que l'ajustement automatique de la position et/ou de l'orientation du véhicule est terminé sur la base, au moins en partie, du premier faisceau de signaux de retour.

2. Procédé selon la revendication 1, comprenant en outre :
le positionnement grossier d'un second émetteur de faisceau de signaux situé sur le véhicule en ligne avec une seconde cible d'alignement, dans lequel la seconde cible d'alignement est alignée avec une grille prédéfinie ;
l'émission d'un second faisceau de signaux à partir du second émetteur de faisceau de signaux vers la seconde cible d'alignement ;
le contrôle d'un second faisceau de signaux de retour à partir de la seconde cible d'alignement et l'ajustement d'au moins l'une parmi une position et une orientation du véhicule sur la base du premier et du second faisceau de signaux de retour ; et
la détermination que l'ajustement automatique de la position et/ou de l'orientation du véhicule est terminé sur la base du premier et du second faisceau de signaux de retour.

3. Procédé selon la revendication 1, dans lequel la première cible d'alignement comprend une zone d'alignement réfléchissante pour renvoyer le premier faisceau de signaux vers le véhicule si le véhicule est aligné avec la première cible d'alignement, et une zone absorbante pour absorber le premier faisceau de signaux si le véhicule n'est pas aligné avec la première cible d'alignement.

4. Procédé selon la revendication 1, dans lequel le premier faisceau de signaux et le second faisceau de signaux sont orientés de manière à émettre de la lumière vers des endroits différents.

5. Appareil (300) comprenant un véhicule autonome (202) et une première cible d'alignement (500) ;
le véhicule autonome (202) comprenant :
un premier émetteur de faisceau de signaux (204) et un second émetteur de faisceau de signaux (208) éloigné du premier émetteur de faisceau de signaux, dans lequel le premier émetteur de faisceau de signaux doit émettre un premier faisceau de signaux dans une direction différente de celle du second émetteur de faisceau de signaux ;
un premier capteur (206) pour recevoir un premier faisceau de signaux de retour à partir de l'émetteur du premier faisceau de signaux après renvoi vers le véhicule autonome à partir d'une première cible d'alignement ; et
un circuit de traitement (212) adapté pour exécuter le procédé selon la revendication 1 ; et, en réponse, émettre un signal indiquant que le véhicule autonome est aligné avec la première cible d'alignement ;
**caractérisé en ce que** la première cible d'alignement comprend une surface réfléchissante inclinée pour renvoyer le premier faisceau de signaux émis par le premier émetteur de faisceaux de signaux vers le véhicule, de sorte qu'une première longueur de trajet de faisceau dépend d'un lieu d'incidence du premier faisceau de signaux sur la surface réfléchissante inclinée.

6. Appareil selon la revendication 5, comprenant en outre :
un second capteur pour recevoir un second faisceau de signaux de retour à partir du second émetteur de faisceau de signaux après renvoi vers le véhicule autonome à partir d'une seconde cible d'alignement, dans lequel le circuit de traitement est adapté pour exécuter le procédé selon la revendication 2 ; et, en réponse, émettre un signal indiquant que le véhicule autonome est aligné avec la seconde cible d'alignement.

7. Appareil selon la revendication 6, dans lequel le circuit de traitement doit déterminer, sur la base des données de capteur reçues à partir du premier et du second capteur, que le véhicule autonome n'est pas aligné avec la première et la seconde cible d'alignement, et en réponse, commander un système de commande de mouvement du véhicule autonome pour ajuster au moins l'une parmi une position et une orientation du véhicule.

8. Appareil selon la revendication 7, dans lequel le circuit de traitement doit déterminer, sur la base des données de capteur reçues à partir du premier et du second capteur, la direction dans laquelle le véhicule autonome doit être déplacé.

9. Appareil selon la revendication 5, dans lequel le premier émetteur de faisceau de signaux est monté sur le véhicule autonome pour émettre le premier faisceau de signaux dans une direction parallèle à la direction de déplacement du véhicule et le second émetteur de faisceau de signaux est monté sur le véhicule autonome pour émettre le second faisceau de signaux dans une direction perpendiculaire à la direction de déplacement.

10. Appareil selon la revendication 5, comprenant en outre une cible d'alignement comprenant une zone d'alignement réfléchissante pour renvoyer le premier faisceau de signaux émis par le premier émetteur de faisceau de signaux vers le véhicule si le véhicule est aligné avec la première cible d'alignement, et une zone absorbante pour absorber le premier faisceau de signaux émis par le premier émetteur de faisceau de signaux si le véhicule n'est pas aligné avec la première cible d'alignement.

11. Appareil selon l'une quelconque des revendications 5 à 10 ci-dessus, dans lequel le premier et le second émetteur de faisceau de signaux sont des émetteurs de faisceaux laser.

12. Support tangible lisible par machine (600) comprenant un ensemble d'instructions (604) qui, lorsqu'elles sont exécutées par un processeur (602), amènent le processeur à :
commander l'appareil selon la revendication 5 pour mettre en oeuvre le procédé selon la revendication 1.
